# EUROPEAN PATENT SPECIFICATION

(11) **EP 4 280 028 B1**
(45) Date of publication and mention of the grant of the patent: **19.08.2026**
(21) Application number: 23717813.2
(22) Date of filing: 23.03.2023
(51) Int. Cl.: G06F 1/16, H04M 1/02, G09F 9/30, H04M 1/18

(54) **SLIDABLE ELECTRONIC DEVICE INCLUDING STRUCTURE FOR PREVENTING INGRESS OF FOREIGN MATTER**
VERSCHIEBBARE ELEKTRONISCHE VORRICHTUNG MIT STRUKTUR ZUR VERHINDERUNG DES EINDRINGENS VON FREMDKÖRPERN
DISPOSITIF ÉLECTRONIQUE COULISSANT COMPRENANT UNE STRUCTURE POUR EMPÊCHER L'ENTRÉE DE CORPS ÉTRANGERS

(30) Priority: 25.03.2022 KR 20220037358; 22.07.2022 KR 20220090703
(43) Date of publication of application: 22.11.2023
(73) Proprietor: Samsung Electronics Co., Ltd., Suwon-Si, Gyeonggi-do 16677 (KR)
(72) Inventor: KANG, Youngmin, Suwon-si, Gyeonggi-do 16677 (KR); SHIN, Moonchul, Suwon-si, Gyeonggi-do 16677 (KR); YOON, Yeonggyu, Suwon-si, Gyeonggi-do 16677 (KR); CHO, Joongyeon, Suwon-si, Gyeonggi-do 16677 (KR); CHOI, Junyoung, Suwon-si, Gyeonggi-do 16677 (KR); YOON, Byounguk, Suwon-si, Gyeonggi-do 16677 (KR); LEE, Junghyeob, Suwon-si, Gyeonggi-do 16677 (KR); CHO, Sunggun, Suwon-si, Gyeonggi-do 16677 (KR)
(74) Representative: Gulde & Partner
(86) International application number: PCT/KR2023/003864
(87) International publication number: WO 2023/182830

(56) References cited:
- EP-A1- 4 149 092
- EP-A1- 4 152 121
- EP-A1- 4 270 910
- WO-A1-2021/157757
- WO-A1-2021/246802
- KR-A- 20160 047 100
- KR-A- 20190 112 535
- KR-A- 20210 141 185
- KR-A- 20210 141 185
- KR-A- 20220 031 066

## Description

### [Technical Field]

Various embodiments of the disclosure relate to a slidable electronic device including a foreign object inflow prevention structure capable of blocking the inflow of a foreign object.

### [Background Art]

As deformable displays are developed, new types of electronic devices other than traditional bar-type electronic devices are emerging.

A slidable electronic device may refer to a new type of electronic device including a slidable housing and allowing a display area of a display to be expanded or reduced in response to the sliding of the housing. Various electronic devices including a slide function for a display are known in the art, see, for example KR 2021 0141185 A, WO 2021/246802 A1, and EP 4 270 910 A1, the latter being prior art under Article 54(3) EPC.

### [Disclosure]

### [Technical Problem]

In the case of the slidable electronic device, at a portion where the display slides in or out, the display may be separated from other structures in consideration of smooth slide-in and slide-out operations of the display.

A foreign object may be introduced into a portion where the display and the structure are separated. If a foreign object enters the inside of the electronic device, it may cause serious damage.

In order to prevent the introduction of foreign objects, a separate member for blocking a space of a portion where the display slides in or out may be disposed. However, this member may interfere with smooth sliding of the display and, in some case, may cause damage to the display such as a surface scratch.

Various embodiments of the disclosure may provide, in the slidable electronic device, a foreign object blocking member having a structure capable of not only preventing foreign objects from being introduced into a portion where the display slides out or in, but also enabling smooth sliding of the display.

### [Technical Solution]

According to various embodiments of the disclosure, an electronic device is provided in accordance with the appended claims.

### [Advantageous Effects]

According to various embodiments of the disclosure, it is possible to reduce a phenomenon of the slidable electronic device that an external foreign object is introduced into a portion where the display slides in or out. This can improve the overall durability of the electronic device.

In addition, while the slidable electronic device slides, interference between the display and the foreign object blocking member is reduced, so that damage such as damage to the display by the foreign object blocking member can be reduced.

### [Description of Drawings]

In connection with the description of the drawings, the same or similar reference numerals may be used for the same or similar components.
FIG. 1 is a block diagram illustrating an electronic device 101 in a network environment 100 according to various embodiments.
FIGS. 2A and 2B are views illustrating the front and rear of an electronic device in a slide-in state according to various embodiments of the disclosure.
FIGS. 3A and 3B are views illustrating the front and rear of an electronic device in a slide-out state according to various embodiments of the disclosure.
FIG. 4 is an exploded perspective view illustrating an electronic device according to various embodiments of the disclosure.
FIG. 5A is a cross-sectional view illustrating an electronic device taken along line 5a-5a of FIG. 2A according to various embodiments of the disclosure.
FIG. 5B is a cross-sectional view illustrating an electronic device taken along line 5b-5b of FIG. 3A according to various embodiments of the disclosure.
FIG. 6 is a perspective view illustrating a foreign object blocking member according to various embodiments of the disclosure.
FIG. 7 is a view illustrating an electronic device including a foreign object blocking member according to various embodiments of the disclosure.
FIG. 8 is a perspective view illustrating a rollable display and a support member supporting the same according to various embodiments of the disclosure.
FIG. 9A is a front development view illustrating a rollable display and a support member according to various embodiments of the disclosure.
FIG. 9B is a rear development view illustrating a rollable display and a support member according to various embodiments of the disclosure.
FIG. 9C is a rear development view illustrating a rollable display and a support member according to various embodiments of the disclosure.
FIG. 10A is a view illustrating the operation of a foreign object blocking member in an intermediate state of an electronic device according to various embodiments of the disclosure.
FIG. 10B is a view illustrating the operation of a foreign object blocking member in a first state of an electronic device according to various embodiments of the disclosure.
FIG. 10C is a view illustrating the operation of a foreign object blocking member in a second state of an electronic device according to various embodiments of the disclosure.
FIG. 11 is a view illustrating an example of changing a rotation axis of a foreign object blocking member according to various embodiments of the disclosure.
FIGS. 12A and 12B are views illustrating blocking members according to various embodiments of the disclosure.

### [Mode for Disclosure]

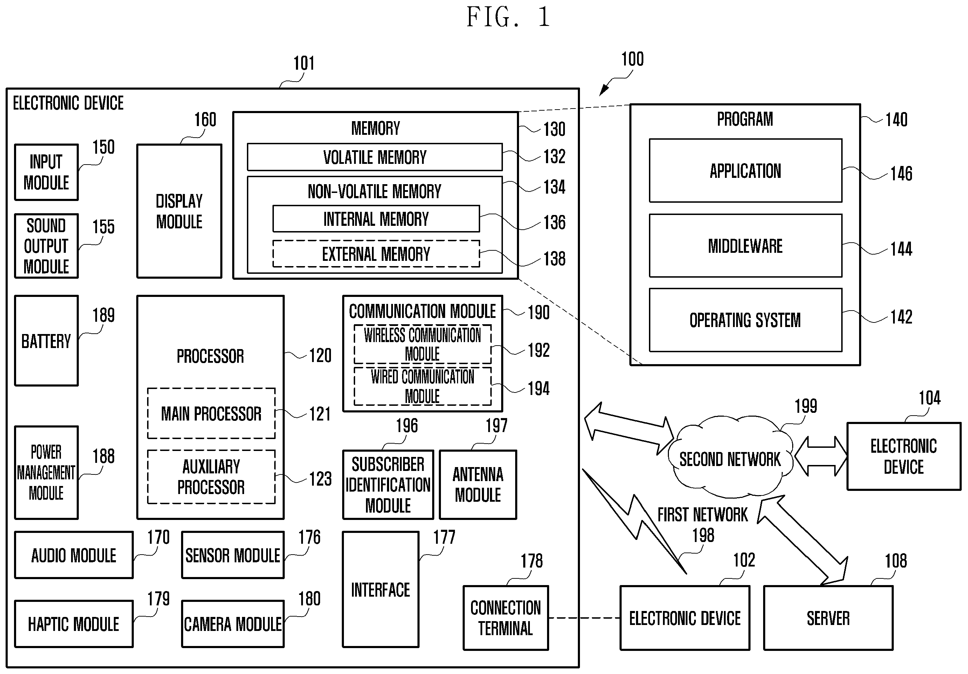

FIG. 1 is a block diagram illustrating an electronic device in a network environment according to various embodiments. Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter(mm) Wave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

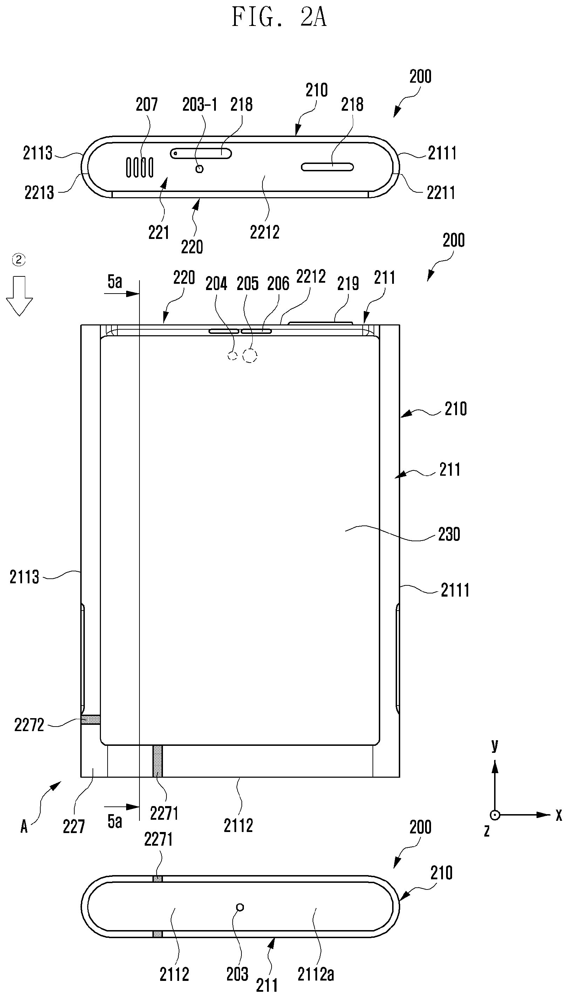

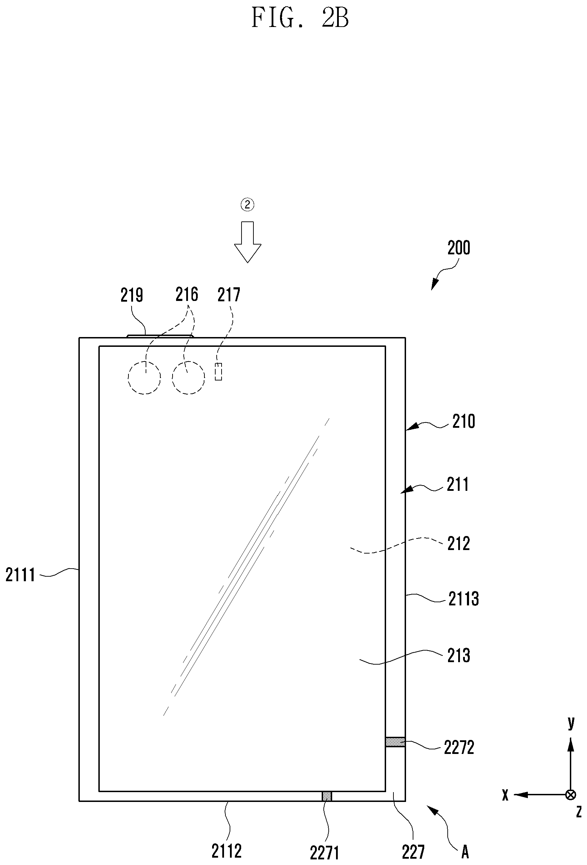

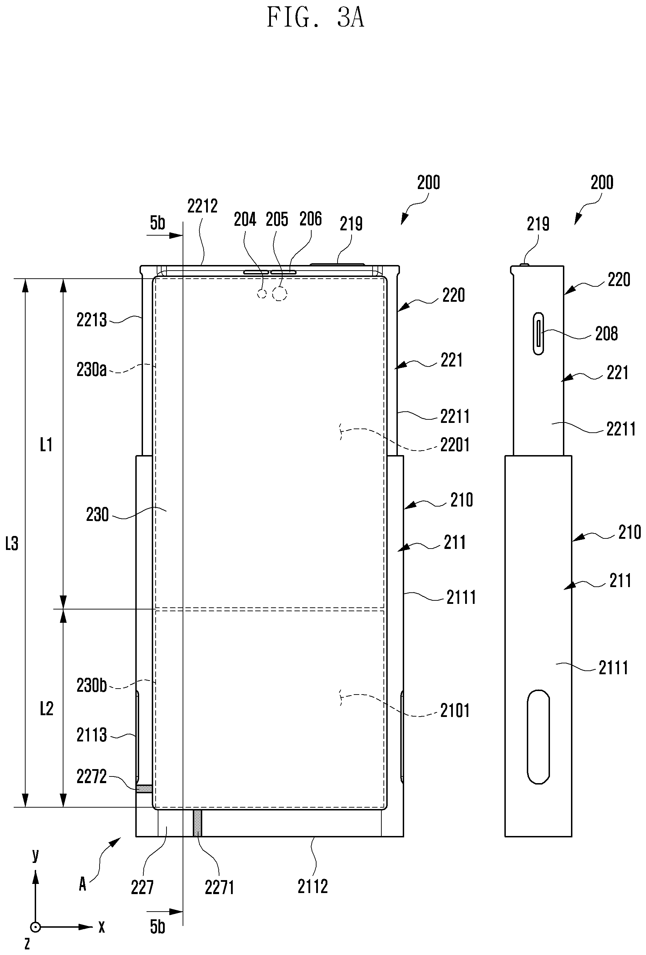

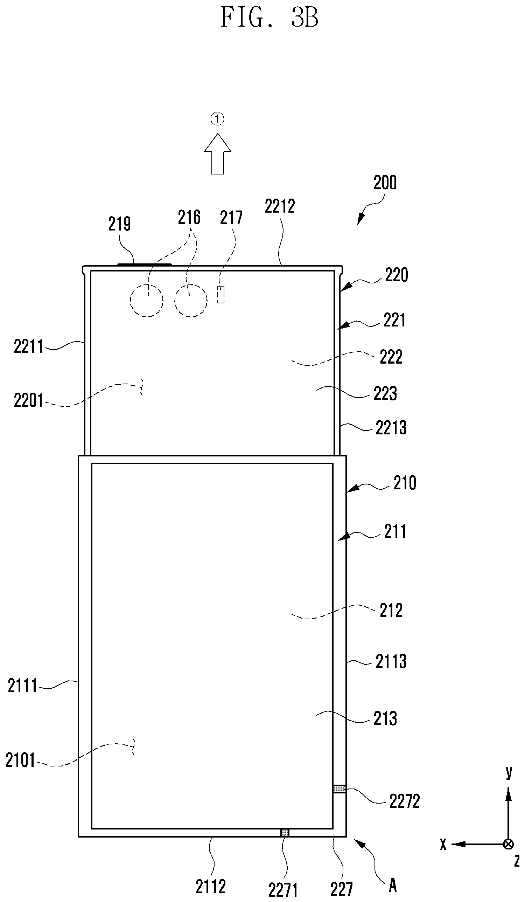

FIGS. 2A and 2B are views illustrating the front and rear of an electronic device in a slide-in state according to various embodiments of the disclosure. FIGS. 3A and 3B are views illustrating the front and rear of an electronic device in a slide-out state according to various embodiments of the disclosure.

The electronic device 200 of FIGS. 2A to 3B may be similar at least in part to the electronic device 101 of FIG. 1 or may further include other embodiments of the electronic device.

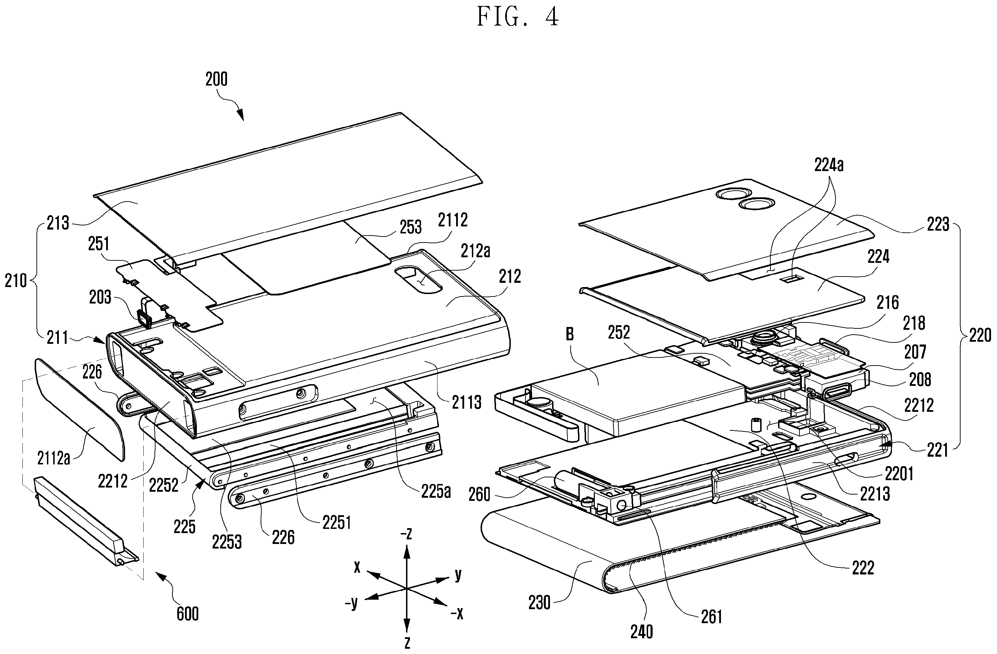

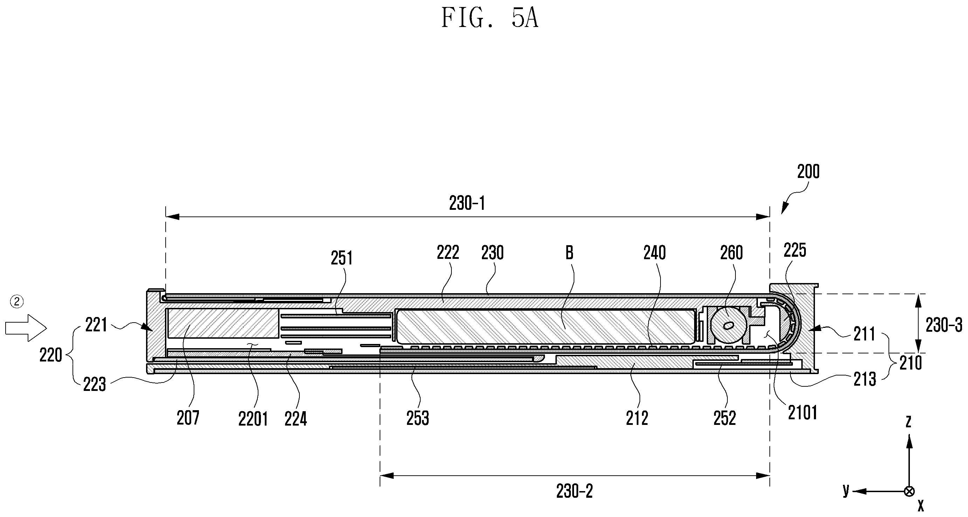

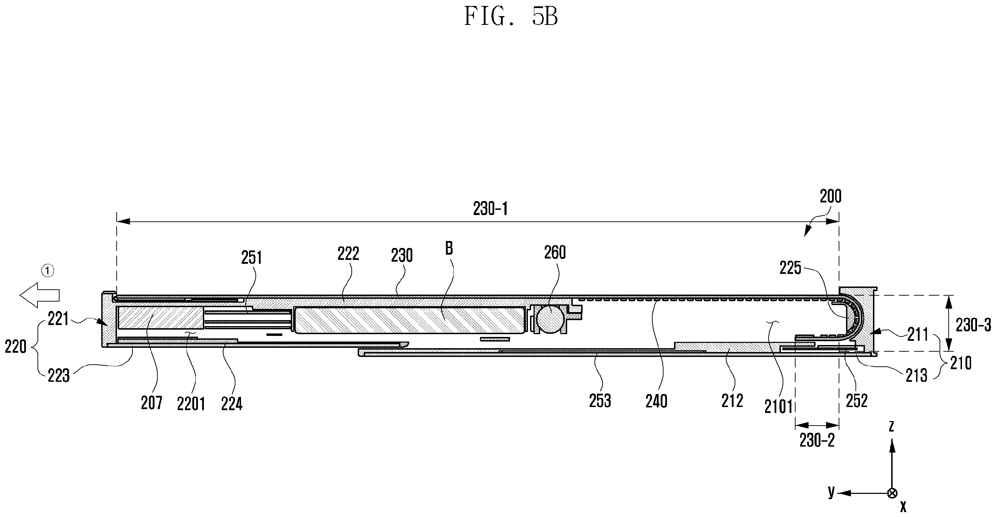

With reference to FIGS. 2A to 3B, the electronic device 200 includes a first housing 210, a second housing 220 combined with the first housing 210 so as to be slidable in a designated direction (e.g., a direction ① or ②) (e.g., a positive or negative y-axis direction) from the first housing 210, and a rollable display 230 (e.g., a flexible display, an expandable display, or a stretchable display) disposed to be supported through at least a portion of the first housing 210 and the second housing 220. According to an embodiment, in the electronic device 200, the second housing 220 may be disposed to slide out in a first direction (direction ①) with respect to the first housing 210 gripped by the user or slide in a second direction (direction ② opposite to the first direction (direction ①). According to an embodiment, at least a portion of the second housing 220 including a second space 2201 may be accommodated in a first space 2101 of the first housing 210, so that the state can be changed to the slide-in state. According to an embodiment, the electronic device 200 may include a support member (e.g., the support member 240 in FIG. 4) (e.g., a bendable member, an articulated hinge module, or a multi-bar assembly), which forms at least in part the same plane as at least a portion of the second housing 220 in the slide-out state and is accommodated at least in part into the first space 2101 of the first housing 220 in the slide-in state. According to an embodiment, in the slide-in state, at least a portion of the rollable display 230 may be disposed to be invisibly from the outside by being accommodated in the first space 2101 of the first housing 210 while being supported by the support member (e.g., the support member 240 in FIG. 4). According to an embodiment, in the slide-out state, at least a portion of the rollable display 230 may be disposed to be visible from the outside by being accommodated in the first space 2101 in a bending manner while being supported by the support member (e.g., the support member 240 in FIG. 4) forming the same plane at least in part as the second housing 220. Depending on the sliding of the second housing 220 with respect to the first housing 210, an externally visible portion (e.g., a display area, e.g., the display area 230-1 in FIGS. 5A and 5B) of the rollable display 230 may increase or decrease. Also, depending on the sliding of the second housing 220 with respect to the first housing 210, an internally accommodated portion (e.g., an accommodated area, e.g., the accommodated area 230-2 in FIG. 5A) in the electronic device 200 may increase or decrease.

According to various embodiments, the electronic device 200 may include the first housing 210 including a first lateral member 211 and the second housing 220 including a second lateral member 221. According to an embodiment, the first lateral member 211 may have a first side surface 2111 extending along the first direction (e.g., the y-axis direction), a second side surface 2112 extending to have a length shorter than that of the first side surface 2111 along a direction (e.g., the x-axis direction) substantially perpendicular to the first side surface 2111, and a third side surface 2113 extending substantially parallel to the first side surface 2111 from the second side surface 2112. According to an embodiment, the first lateral member 211 may be formed of, at least in part, a conductive material (e.g., metal). In some embodiment, the first lateral member 211 may be formed of a combination of a conductive material and a non-conductive material (e.g., polymer). According to an embodiment, the first housing 210 may include a first extension member 212 extending from at least a portion of the first lateral member 211 to at least a portion of the first space 2101. According to an embodiment, the first extension member 212 may be formed integrally with the first lateral member 211. In some embodiment, the first extension member 212 may be formed separately from the first lateral member 211 and structurally combined with the first lateral member 211.

According to various embodiments, the second lateral member 221 may have a fourth side surface 2211 corresponding at least in part to the first side surface 2111, a fifth side surface 2212 extending in a direction substantially parallel to the second side surface 2112 from the fourth side surface 2211 and shorter than the fourth side surface 2211, and a sixth side surface 2213 extending from the fifth side surface 2212 to correspond to the third side surface 2113. According to an embodiment, the second lateral member 221 may be formed of, at least in part, a conductive material (e.g., metal). In some embodiment, the second lateral member 221 may be formed of a combination of a conductive material and a non-conductive material (e.g., polymer). According to an embodiment, at least a portion of the second lateral member 221 may include a second extension member 222 extending to at least a portion of the second space 2201 of the second housing 220. According to an embodiment, the second extension member 222 may be formed integrally with the second lateral member 221. In some embodiment, the second extension member 222 may be formed separately from the second lateral member 221 and structurally combined with the second lateral member 221.

According to various embodiments, the first side surface 2111 and the fourth side surface 2211 may be slidably coupled to each other. According to an embodiment, the third side surface 2113 and the sixth side surface 2213 may be slidably coupled to each other. According to an embodiment, in the slide-in state, the fourth side surface 2211 may overlap with the first side surface 2111, thereby being substantially invisible from the outside. According to an embodiment, in the slide-in state, the sixth side surface 2213 may overlap with the third side surface 2113, thereby being substantially invisible from the outside. In some embodiment, at least a portion of the fourth and sixth side surfaces 2211 and 2213 may be disposed to be visible at least in part from the outside in the slide-in state. According to an embodiment, in the slide-in state, the second extension member 222 may overlap with the first extension member 212, thereby being substantially invisible from the outside. In some embodiment, in the slide-in state, a portion of the second extension member 222 may overlap with the first extension member 212 so as to be invisible from the outside, and the remainder of the second extension member 222 may be disposed to be visible from the outside.

According to various embodiments, the first housing 210 may include a first rear cover 213 combined with at least a portion of the first lateral member 211. According to an embodiment, the first rear cover 213 may be disposed to be combined with at least a portion of the first extension member 212. In some embodiment, the first rear cover 213 may be formed integrally with the first lateral member 211. According to an embodiment, the first rear cover 213 may be made of a polymer, coated or colored glass, ceramic, metal (e.g., aluminum, stainless steel (STS), or magnesium), or a combination of at least two of these materials. In some embodiment, the first rear cover 213 may extend to at least a portion of the first lateral member 211. In some embodiment, at least a portion of the first extension member 212 may be replaced with the first rear cover 213.

According to various embodiments, the second housing 220 may include a second rear cover 223 combined with at least a portion of the second lateral member 221. According to an embodiment, the second rear cover 223 may be disposed to be combined with at least a portion of the second extension member 222. In some embodiment, the second rear cover 223 may be formed integrally with the second lateral member 221. According to an embodiment, the second rear cover 223 may be made of a polymer, coated or colored glass, ceramic, metal (e.g., aluminum, stainless steel (STS), or magnesium), or a combination of at least two of these materials. In some embodiment, the second rear cover 223 may extend to at least a portion of the second lateral member 221. In some embodiment, at least a portion of the second extension member 222 may be replaced with the second rear cover 223.

The electronic device 200 includes the rollable display 230 disposed to be supported by at least a portion of the first and second housings 210 and 220. According to an embodiment, the rollable display 230 may include a first portion 230a (e.g., a flat portion) that is always visible from the outside, and a second portion 230b (e.g., a bendable portion) that extends from the first portion 230a and is accommodated at least in part in the first space 2101 of the first housing 210 in the slide-in state so as not to be visible at least in part from the outside. According to an embodiment, the first portion 230a may be disposed to be supported by the second housing 220, and the second portion 230b may be disposed to be supported at least in part by the support member (e.g., the support member 240 in FIG. 4). According to an embodiment, in the slide-out state in which the second housing 220 slides out along the first direction (direction ①), the second portion 230b of the rollable display 230 may be disposed to extend from the first portion 230a while being supported by the support member (e.g., the support member 240 in FIG. 4), to form a substantially same plane as the first portion 230a, and to be visible from the outside. According to an embodiment, in the slide-in state in which the second housing 220 slides in along the second direction (direction ②), the second portion 230b of the rollable display 230 may be disposed to be bent and accommodated into the first space 2101 of the first housing 210 and to be invisible from the outside. Therefore, in the electronic device 200, the display area of the rollable display 230 may vary in area as the second housing 220 slides from the first housing 210 in a designated direction (e.g., the positive or negative y-axis direction).

According to various embodiments, the rollable display 230 may vary in length in the first direction (direction ①) as the second housing 220 slides with respect to the first housing 210. For example, in the slide-in state, the rollable display 230 may have a first display area (e.g., an area corresponding to the first portion 230a) corresponding to a first length L1. According to an embodiment, in the slide-out state, depending on the sliding movement of the second housing 220 by a second length L2 based on the first housing 210, the rollable display 230 may be expanded to have a third display area (e.g., the first portion 230a and the second portion 230b), which corresponds to a third length L3 greater than the first length L1 and is larger than the first display area.

According to various embodiments, the electronic device 200 may include at least one of an input device (e.g., a microphone 203-1), a sound output device (e.g., a call receiver 206 or a speaker 207), sensor modules 204 and 217, a camera module (e.g., a first camera module 205 or a second camera module 216), a connector port 208, a key input device 219, and an indicator (not shown), which are disposed in the second space 2201 of the second housing 220. According to an embodiment, the electronic device 200 may include another input device (e.g., the microphone 203) disposed in the first housing 210. In another embodiment, the electronic device 200 may be configured such that at least one of the above-described components is omitted or other components are additionally included. In another embodiment, at least one of the above-described components may be disposed in the first space 2101 of the first housing 210.

According to various embodiments, the input device may include the microphone 203-1. In some embodiment, the input device (e.g., the microphone 203-1) may include a plurality of microphones disposed to detect the direction of sound. The sound output device may include, for example, the call receiver 206 and the speaker 207. According to an embodiment, regardless of the slide-in or slide-out state, the speaker 207 may correspond to the outside through at least one speaker hole formed in the second housing 220 at a position (e.g., the fifth side surface 2212) that is always exposed to the outside. According to an embodiment, in the slide-out state, the connector port 208 may correspond to the outside through a connector port hole formed in the second housing 220. In some embodiment, in a slide-in state, the connector port 208 may correspond to the outside through an opening formed in the first housing 210 and formed to correspond to the connector port hole. In some embodiment, the call receiver 206 may include a speaker (e.g., a piezo speaker) that operates without a separate speaker hole.

According to various embodiments, the sensor modules 204 and 217 may generate an electrical signal or data value corresponding to an internal operating state of the electronic device 200 or an external environmental state. The sensor modules 204 and 217 may include, for example, a first sensor module 204 (e.g., a proximity sensor or an illuminance sensor) disposed in the front of the electronic device 200 and/or a second sensor module 217 (e.g., a heart rate monitoring (HRM) sensor) disposed in the rear of the electronic device 200. According to an embodiment, the first sensor module 204 may be disposed under the rollable display 230 in the front of the electronic device 200. According to an embodiment, the first sensor module 204 and/or the second sensor module 217 may include at least one of a proximity sensor, an illuminance sensor, a time of flight (TOF) sensor, an ultrasonic sensor, a fingerprint recognition sensor, a gesture sensor, and a gyro sensor, an air pressure sensor, a magnetic sensor, an acceleration sensor, a grip sensor, a color sensor, an infrared (IR) sensor, a biometric sensor, a temperature sensor, and a humidity sensor.

According to various embodiments, the camera module may include a first camera module 205 disposed in the front of the electronic device 200 and a second camera module 216 disposed in the rear of the electronic device 200. According to an embodiment, the electronic device 200 may include a flash (not shown) positioned near the second camera module 216. According to an embodiment, the camera modules 205 and 216 may include one or more lenses, an image sensor, and/or an image signal processor. According to an embodiment, the first camera module 205 may be disposed under the rollable display 230 and configured to photograph a subject through a part of an active area (e.g., a display area) of the rollable display 230.

According to various embodiments, the first camera module 205 among the camera modules and some sensor module 204 among the sensor modules 204 and 217 may be disposed to detect the external environment through the rollable display 230. For example, in the second space 2201 of the second housing 220, the first camera module 205 or some sensor module 204 may be disposed to be in contact with the external environment through a transmissive region or perforated opening formed in the rollable display 230. According to an embodiment, the region of the rollable display 230 facing the first camera module 205 is a part of the display area for displaying contents and may be formed as the transmissive region having a specified transmittance. According to an embodiment, the transmissive region may be formed to have a transmittance in a range of about 5% to about 20%. The transmissive region may include an area overlapping with an effective area (e.g., an angle-of-view area) of the first camera module 205 and allowing light for generating an image at the image sensor to pass through. For example, the transmissive region of the rollable display 230 may include an area having a lower pixel arrangement density and/or wiring density than the surrounding area. For example, the transmissive region may replace the aforementioned opening. For example, some camera module 205 may include an under display camera (UDC). In some embodiment, some sensor module 204 may be disposed to perform its function while being not visually exposed through the rollable display 230 in the inner space of the electronic device 200.

According to various embodiments, the electronic device 200 may include at least one antenna electrically connected to a wireless communication circuit (e.g., the wireless communication module 192 in FIG. 1) disposed in the second housing 220. In some embodiment, the wireless communication circuit may be disposed in the first space 2101 of the first housing 210. According to an embodiment, the electronic device 200 may include an antenna A including at least a portion of the conductive first lateral member 211 of the first housing 210. For example, the antenna A may include a conductive portion 227 disposed on at least a portion of the second and third side surfaces 2112 and 2113 of the first lateral member 211 and electrically isolated by at least one segment 2271 and 2272 formed of a non-conductive material (e.g., polymer). According to an embodiment, the wireless communication circuit (e.g., the wireless communication module 192 in FIG. 1) may be configured to transmit or receive a wireless signal in at least one designated frequency band (e.g., about 800 MHz to 6000 MHz) (e.g., the legacy band) through the conductive portion 227. According to an embodiment, the electronic device 200 may include a lateral cover 2112a disposed on the second side surface 2112. In some embodiment, the antenna A may be disposed on at least one of the first side surface 2111, the second side surface 2112, or the third side surface 2113. In some embodiment, the electronic device 200 may further include at least one antenna module (e.g., a 5G antenna module or antenna structure) disposed in the inner space (e.g., the first space 2101 or the second space 2201) and disposed to transmit or receive a wireless signal in a frequency band of about 3 GHz to 100 GHz through another wireless communication circuit (e.g., the wireless communication module 192 in FIG. 1).

According to various embodiments, the slide-in/slide-out operations of the electronic device 200 may be automatically performed. For example, the slide-in/slide-out operations of the electronic device 200 may be performed through a driving motor (e.g., a driving motor 260 in FIG. 4) including a pinion gear (e.g., a pinion gear 261 in FIG. 4) disposed in the second space 2201 of the second housing 220 and a gearing operation of a rack gear (e.g., a rack gear 2251 in FIG. 4) disposed in the first space 2101 of the first housing 210 and gear-engaged with the pinion gear 261. For example, in the case of detecting a triggering operation for changing from the slide-in state to the slide-out state or from the slide-out state to the slide-in state, the processor (e.g., the processor 120 in FIG. 1) of the electronic device 200 may operate the driving motor (e.g., the driving motor 260 in FIG. 4) disposed inside the electronic device 200. According to an embodiment, the triggering operation may include selecting (e.g., touching) an object displayed on the rollable display 230 or manipulating a physical button (e.g., a key button) included in the electronic device 200.

The electronic device 200 according to embodiments of the disclosure may provide an extended sliding distance (stroke) by having a design structure in which the driving motor (e.g., the driving motor 260 in FIG. 4) is disposed at an end (e.g., a lower end of the second housing 220 in the slide-in state) of the second housing 220 in the slide-in direction (direction ②) in the second space 2201, and the pinion gear of the driving motor 260 is engaged with the rack gear (e.g., the rack gear 2251 in FIG. 4 ) disposed in the first space 2101 of the first housing 210. In addition, the electronic device 200 may provide an efficient electrical connection structure with the driving motor 260 by including electronic components (e.g., a substrate or a battery) disposed together with the driving motor 260 in the second space 2201 of the second housing 220. In addition, the electronic device 200 may improve operational reliability by including a support structure disposed in the first space 2101 of the first housing 210 to support at least a portion of the rollable display 230 in the slide-out state.

Hereinafter, detailed descriptions will be given.

FIG. 4 is an exploded perspective view illustrating an electronic device according to various embodiments of the disclosure.

In describing the electronic device 200 shown in FIG. 4, the same reference numerals are assigned to components substantially the same as those of the electronic device 200 shown in FIGS. 2A to 3B, and detailed descriptions thereof may be omitted.

With reference to FIG. 4, the electronic device 200 may include the first housing 210 having the first space 2101, the second housing 220 slidably combined with the first housing 210 and having the second space (e.g., the second space 2201 in FIG. 3A), the support member 240 disposed to be bendable at least in part in the first space 2101, the rollable display 230 disposed to be supported by at least a portion of the support member 240 and the second housing 220, and a moving unit for driving the second housing 220 in the slide-in direction (e.g., the negative y-axis direction) and/or the slide-out direction (e.g., the y-axis direction) with respect to the first housing 210. According to an embodiment, the moving unit may include the driving motor 260 disposed in the second space 2201 and including the pinion gear, and the rack gear 2251 disposed to be engaged with the pinion gear 261 in the first space 2101. According to an embodiment, the moving unit may further include a deceleration module including a plurality of gear assemblies coupled to the driving motor 260 and disposed to reduce a rotational speed and increase a driving force. According to an embodiment, the driving motor 260 may be disposed to be supported through at least a portion of the second extension member 222 in the second space 2201 of the second housing 220. According to an embodiment, the driving motor 260 may be fixed to an end (e.g., an edge) of the second extension member 222 in the slide-in direction (e.g., the negative y-axis direction) in the second space 2201.

According to various embodiments, the electronic device 200 may include at least one electronic component disposed in the first housing 210 and the second housing 220. According to an embodiment, the at least one electronic component may include a first printed circuit board 251 disposed in the first housing 210, and/or a second printed circuit board 252 disposed in the second housing 220. Also, a camera module 216, a socket module 218 (e.g., a SIM tray), a speaker 207, a connector port 208, and/or a battery B, disposed around the second printed circuit board 252, may be included. According to an embodiment, because the at least one electronic component is disposed around the second printed circuit board 252 in the second space 2201 of the second housing 220 together with the driving motor 260, efficient electrical connection may be possible.

According to various embodiments, the electronic device 200 may include a rear bracket 224 disposed to cover at least some of the at least one electronic component disposed between the second extension member 222 and the second rear surface cover 223 in the second housing 220. According to an embodiment, the rear bracket 224 may be structurally combined with at least a portion of the second extension member 222. In some embodiment, the rear bracket 224 may be omitted. According to an embodiment, the rear bracket 224 may be disposed to cover the at least one electronic component and support the second rear surface cover 223. According to an embodiment, the rear bracket 224 may have a notch region 224a or an opening 224a (e.g., through hole) formed at a position corresponding to the camera module 216 and/or the sensor module (e.g., the sensor module 217 in FIG. 3B). According to an embodiment, the camera module 216 and/or the sensor module 217 may be disposed to detect the external environment through the notch region 224a or the opening 224a. According to an embodiment, at least a region of the second rear cover 223 corresponding to the camera module 216 and/or the sensor module 217 may be processed to be transparent. In some embodiment, the camera module 216 and/or the sensor module 217 may be configured to operate only when the electronic device 200 is in the slide-out state.

According to various embodiments, the electronic device 200 may include a plate-type support bracket 225 (e.g., DSB, display support bar) disposed in the first space 2101 of the first housing 210 and combined with at least a portion of the first extension member 212. According to an embodiment, the support bracket 225 may have an opening 225a of a specified size. According to an embodiment, the support bracket 225 may include, at one end thereof, a support portion 2252 having a curved outer surface to support the rear surface of the support member 240 bent during the sliding operation. According to an embodiment, the support bracket 225 may include a support plate 2253 extending from at least a part of the support portion 2252 to at least a part of the opening 225a and formed to support the rear surface of the support member 240 in the slide-out state. According to an embodiment, the support bracket 225 may include a rack gear 2251 that crosses the opening 225a and is fixed to have a length along a direction parallel to the sliding direction. In some embodiment, the rack gear 2251 may be integrally formed with the support bracket 225. According to an embodiment, the electronic device 200 may include a pair of guide rails 226 for guiding both ends of the support member 240 in the sliding direction by being disposed on both sides of the support bracket 225.

In various embodiments, the support member 240 may have a bendable structure to support the rollable display 230 that is bent during the sliding process of the electronic device 200. For example, the support member 240 may include a plurality of bar-shaped supporters segmented from each other. Both ends of each supporter included in the support member 240 may be inserted into the pair of guide rails 226. While moving along the guide rails 226, the supporters are capable of supporting the rollable display 230 moving in the sliding process. Because the supporters are segmented from each other, it is possible to support a bendable area (e.g., a bendable area 230-3 in FIGS. 5A and 5B) of the rollable display 230.

According to various embodiments, the first housing 210 may have an opening 212a (e.g., a through hole) formed in a region, in the first extension member 212, corresponding to the camera module 216 and/or the sensor module 217 disposed in the second housing 220 when the electronic device 200 is in the slide-in state. According to an embodiment, when the electronic device 200 is in the slide-in state, the camera module 216 and/or the sensor module 217 may detect the external environment through the opening 212a formed in the first housing 210. In this case, a region the first rear cover 213 at least corresponding to the camera module 216 and/or the sensor module 217 may be processed to be transparent.

According to various embodiments, in the first housing 210, the electronic device 200 may include a first printed circuit board 251 and an antenna member 253 disposed in a space between the first extension member 212 and the first rear cover 213. According to an embodiment, the first printed circuit board 251 and the antenna member 253 may be electrically connected to the second printed circuit board 252 through at least one flexible printed circuit board (FPCB) (e.g., an electrical connection member, or a flexible RF cable(FRC)). In some embodiment, the antenna member 253 may be electrically connected to the first printed circuit board 251, thereby being electrically connected to the second printed circuit board 252 through the first printed circuit board 251.

The electronic device 200 includes a foreign object blocking member 600. The foreign object blocking member 600 may block a foreign object that may be introduced into a portion where the rollable display 230 slides in into the electronic device 200 or slides out from the electronic device 200. The foreign object blocking member 600 is installed in the first housing 210 or the second housing 220 at a portion where the rollable display 230 slides in or out. In the electronic device 200 shown in FIG. 2A, the rollable display 230 slides in or out in the first housing 210, so the foreign object blocking member 600 may be installed in the housing 210 in the case of the structure shown in FIG. 2A. Alternatively, the rollable display 230 may be configured to slide in or out in the second housing 220. In this case, the foreign object blocking member 600 may be installed in the second housing 220.

According to various embodiments, the foreign object blocking member 600 is spaced apart from the rollable display 230 in a process that the rollable display 230 slides in or out, thereby reducing damage to the rollable display 230 due to adhesion between the foreign object blocking member 600 and the rollable display 230 in the slide-in or slide-out process of the flexible display 230. In addition, when the slide-in or slide-out of the rollable display 230 is completed, the foreign object blocking member 600 becomes in close contact with the rollable display 230 to block a foreign object from being introduced into a portion where the rollable display 230 slides in or out.

The foreign object blocking member 600 according to various embodiments will be described in detail later.

In the following description, the same reference numerals are used for components identical or similar to those described with reference to FIGS. 2A to 5B, and detailed descriptions thereof will be omitted.

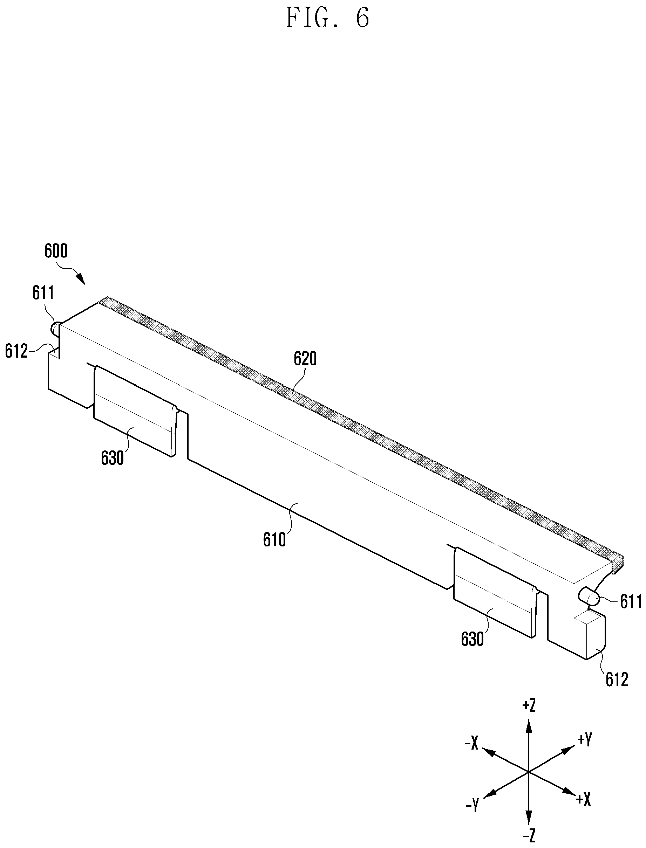

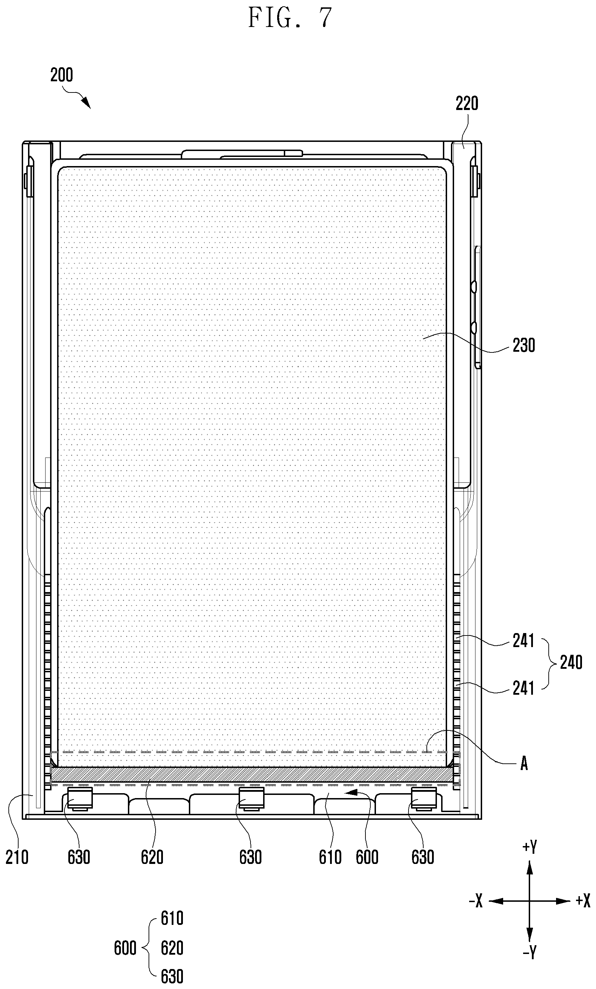

FIG. 6 is a perspective view illustrating a foreign object blocking member according to various embodiments of the disclosure. FIG. 7 is a view illustrating an electronic device including a foreign object blocking member according to various embodiments of the disclosure.

Although FIG. 7 shows some components (e.g., the support member 240) in a form visible from the outside for convenience of illustration, such components may be hidden by other components and thus not be actually seen.

According to various embodiments, the foreign object blocking member 600 may include a body 610, a blocking part 620, and a pressing part 630. The blocking part 620 and the pressing part 630 may be disposed on at least a portion of the body 610.

The above components of the foreign object blocking member 600 are merely exemplary, and the foreign object blocking member 600 may further include components other than the aforementioned components or omit some of the aforementioned components if necessary.

According to various embodiments, the body 610 may be formed to extend in one direction. For example, the body 610 may extend in the X-axis direction of FIG. 6. For example, the extending direction of the body 610 may be a direction perpendicular to the sliding direction (e.g., the Y-axis direction of FIGS. 5A and 5B) of the electronic device 200. The body 610 may be installed to be rotatable in the first housing 210. For example, a shaft 611 passing through the body 610 may be installed in the first housing 210 so that the body 610 may be rotatably installed in the first housing 210. In some embodiment, rotation protrusions may be formed on both sides of the body 610 and inserted into rotation grooves formed inside the first housing 210 so that the body 610 may be rotatably installed in the first housing 210. In another embodiment, rotation grooves may be formed on both sides of the body 610, and rotation protrusions formed on the inside of the first housing 210 may be inserted into the rotation grooves, so that the body 610 may be rotated with respect to the first housing 210. Besides, the body 610 may be rotatably disposed in the first housing 210 in various ways.

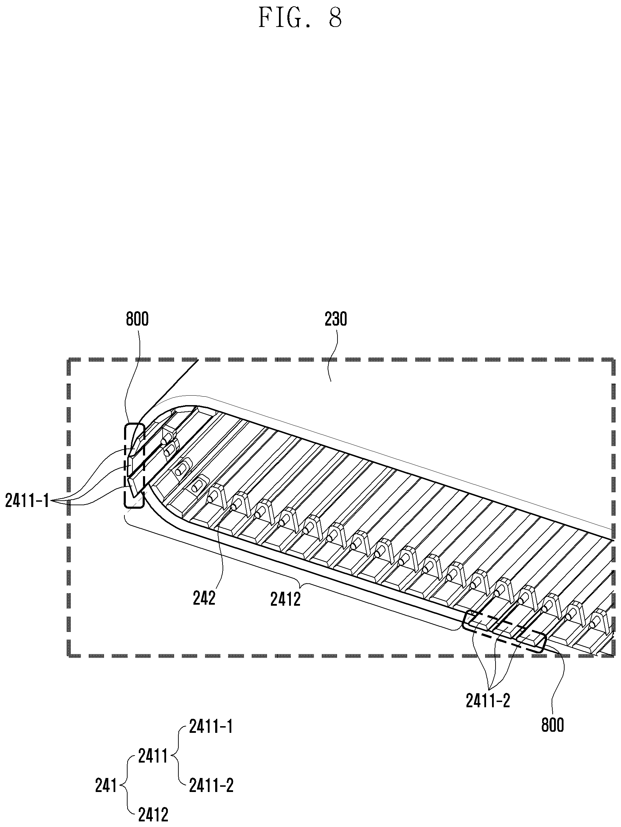

In an embodiment, the body 610 may include contact portions 612. The contact portions 612 may be located on both sides of the body 610 and in contact with a contact member (e.g., a contact member 800 in FIG. 8) to be described later. In an embodiment, the contact portion 612 may be processed to be rounded in part for natural contact with the contact member.

According to various embodiments, the blocking part 620 may be disposed on the body 610. The blocking part 620 may be formed to extend in the same direction (e.g., the X-axis direction in FIG. 6) as the body 610. Depending on the rotation of the body 610, a separation distance of the blocking part 620 from the rollable display 230 may vary. For example, when the blocking part 620 is in close contact with the rollable display 230, an external foreign object may not be introduced into the electronic device 200.

In an embodiment, the separation distance of the blocking part 620 from the rollable display 230 may vary due to an opening motion (e.g., motion that blocking member 620 moves away from the rollable display 230) and a closing motion (e.g., motion that blocking member 620 moves towards the rollable display 230) of the blocking part 620.

In an embodiment, the opening and closing motions of the blocking part 620 may depend on the slide-in or slide-out of the rollable display 230.

In an embodiment, the opening and closing motions of the blocking part 620 may depend on the rotation of the body 610.

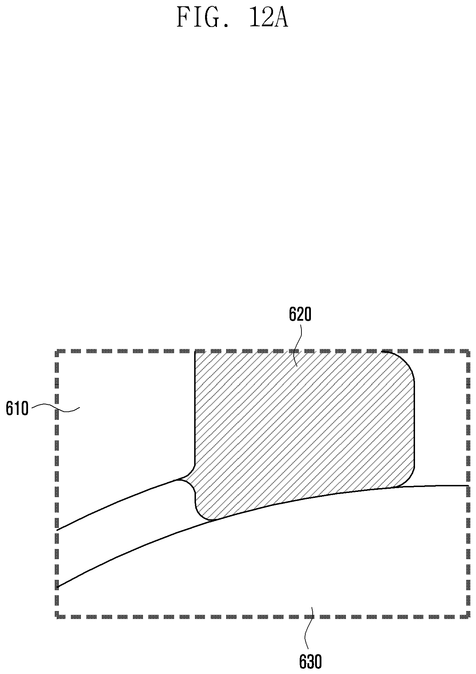

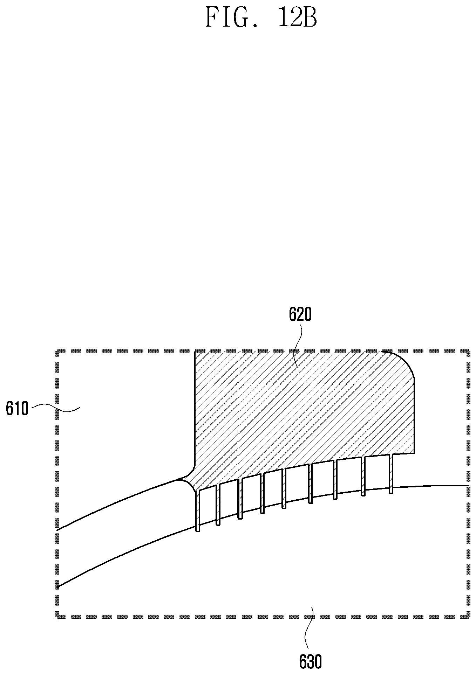

In an embodiment, the blocking part 620 may be formed of an elastic material. For example, the blocking part 620 may be formed of a polymer material such as rubber or synthetic rubber. A detailed description of the blocking part 620 will refer to FIGS. 12A and 12B.

According to various embodiments, the pressing part 630 may provide a rotational force to the body 610. The pressing part 630 may provide a force to the body 610, thereby allowing the body 610 to rotate in a specific direction. The pressing part 630 may include, for example, a leaf spring as shown in FIG. 6. When the body 610 is installed in the first housing 210, the pressing part 630 may be deformed by the inner wall of the first housing 210 and provide a force to the body 610 as a reaction force. By this force, the body 610 may rotate in a specific direction. In addition, the pressing part 630 may include various components that provide a rotational force to the body 610. For example, the pressing part 630 may include a coil spring. In some embodiment, the pressing part 630 may include a member that provides a magnetic force. In this case, when the pressing part 630 provides a magnetic force to the body 610, the body 610 may rotate in a specific direction by the magnetic force.

According to various embodiments, the pressing part 630 may be disposed along the extension direction of the body 610. The number of pressing parts 630 may be variously changed in consideration of the rotational force to be provided to the body 610.

With reference to FIG. 7, the foreign object blocking member 600 according to an embodiment may be installed in the first housing 210. The foreign object blocking member 600 may be rotatably installed in the first housing 210 at a position adjacent to a portion A where the rollable display 230 slides out or is introduced. Depending on the sliding of the second housing 220 relative to the first housing 210, the rollable display 230 may slide in into the electronic device 200 or slide out from the electronic device 200. The foreign object blocking member 600 may be installed at the portion A where the rollable display 230 slides in or out, so as to block a foreign object that may be introduced through this portion.

Different from that shown in FIG. 7, the foreign object blocking member 600 may be installed in the second housing 220. In structure shown in FIG. 7, the rollable display 230 is configured to slide in or slide out in the first housing 210. However, depending on the design of the electronic device 200, the rollable display 230 may slide in or out in the second housing 220. Because the foreign object blocking member 600 should be disposed adjacent to a portion where the rollable display 230 slides in or out, the foreign object blocking member 600 may be rotatably installed in the second housing 220 in a design that the rollable display 230 slides in or out in the second housing 220.

According to various embodiments, at least a portion of the rollable display 230 is supported by the support member 240. The support member 240 includes a plurality of supporters 241 segmented from each other. The plurality of supporters 241 support the rollable display 230 while moving along a guide rail (e.g., the guide rail 226 in FIG. 4).

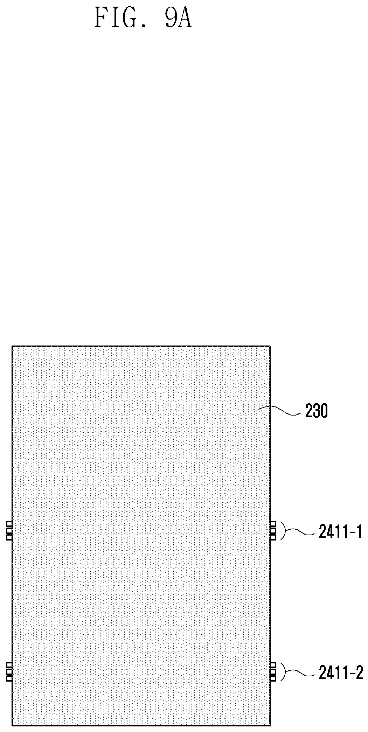

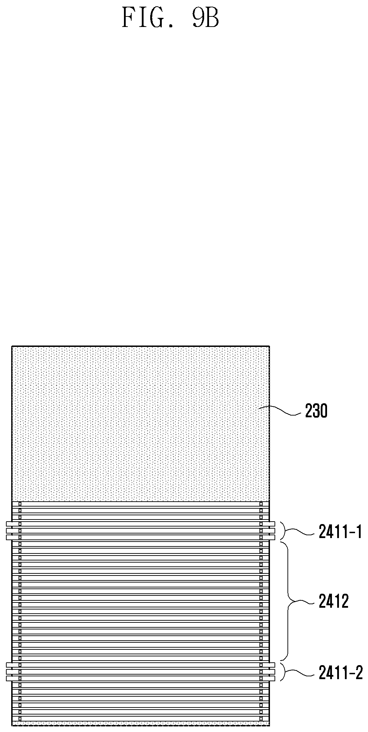

FIG. 8 is a perspective view illustrating a rollable display and a support member supporting the same according to various embodiments of the disclosure. FIG. 9A is a front development view illustrating a rollable display and a support member according to various embodiments of the disclosure. FIG. 9B is a rear development view illustrating a rollable display and a support member according to various embodiments of the disclosure.

The foreign object blocking member 600 according to various embodiments of the disclosure may be rotatably disposed. According to an embodiment, the foreign object blocking member 600 may rotate in a specific direction through contact with the contact member 800. As the foreign object blocking member 600 rotates, the blocking part 620 included in the foreign object blocking member 600 may be in contact with the rollable display 230.

According to various embodiments, the contact member 800 may move in response to the sliding of the rollable display 230. For example, the contact member 800 may be formed or installed on various structures that move with the sliding of the rollable display 230. The contact member 800 may come into contact with the body 610 of the foreign object blocking member 600 in a specific section while moving in response to the sliding of the rollable display 230. When the contact member 800 is in contact with the body 610, the body 610 may rotate so that the blocking part 620 comes into contact with the rollable display 230.

With reference to FIG. 8, in an embodiment, the contact member 800 may include portions protruding from the plurality of supporters 241 included in the support member 240. For example, the contact member 800 may be a part of the plurality of supporters 241. The support member 240 is a component that supports the rollable display 230, and may be a component that moves along with the sliding of the rollable display 230.

With reference to FIGS. 8, 9A, and 9B, the support member 240 may include the plurality of supporters 241. In an embodiment, the plurality of supporters 241 may be formed in the form of a bar extending in one direction (e.g., the X-axis direction in FIG. 8). The extension direction of the supporter 241 may coincide with the extension direction of the body 610. The plurality of supporters 241 may include a first supporter 2411 and a second supporter 2412. For example, the first supporter 2411 may more protrude in the extension direction of the supporter 241 than the second supporter 2412. In another example, the length of the first supporter 2411 may be greater in the extension direction of the supporter 241 than that of the second supporter 2412. A portion in which the first supporter 2411 protrudes more than the second supporter 2412 may be a part in contact with the body 610 in response to the sliding of the rollable display 230. Therefore, the protruding portion of the first supporter 2411 may be understood as the contact member 800.

In an embodiment, with reference to FIG. 9A, the length of the first supporter 2411 including the protruding portion in the X-axis direction may be greater than the length of the rollable display 230 in the X-axis direction.

According to various embodiments, the supporter 241 may include a rail insertion part 242. The rail insertion part 242 may be inserted into a guide rail (e.g., the guide rail 226 in FIG. 4). As the rail insertion part 242 is inserted into the guide rail, the supporter 241 may move along the guide rail.

With reference to FIGS. 8, 9A, and 9B, the first supporter 2411 may include a first-first supporter 2411-1 or a first-second supporter 2411-2. At least some of the second supporters 2412 may be disposed between the first-first supporter 2411-1 and the first-second supporter 2411-2.

In an embodiment, the first supporter 2411 may be disposed at a position corresponding to the body 610. For example, a state in which the first supporter 2411 is disposed at a position corresponding to the body 610 may refer to a state in which at least a part of the first supporter 2411 (e.g., in the first supporter 2411, a part protruding more than the second supporter 2412) is in contact with the contact portion 612 of the body 610.

In an embodiment, the second supporter 2412 may be disposed at a position facing the body 610. For example, a state in which the second supporter 2412 is disposed at a position facing the body 610 may refer to a state in which at least some of the second supporters 2412 and at least a part of the body 610 are disposed to face each other with the rollable display 230 interposed therebetween.

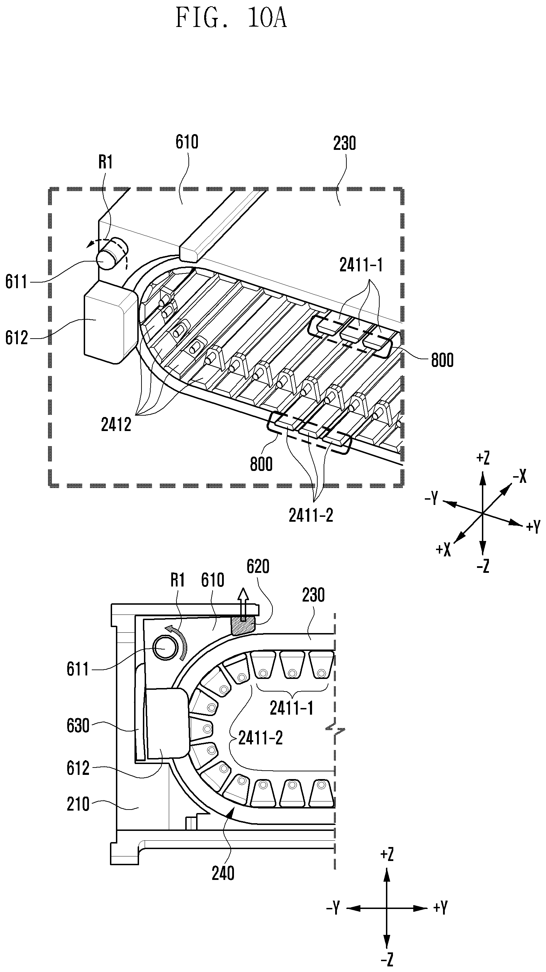

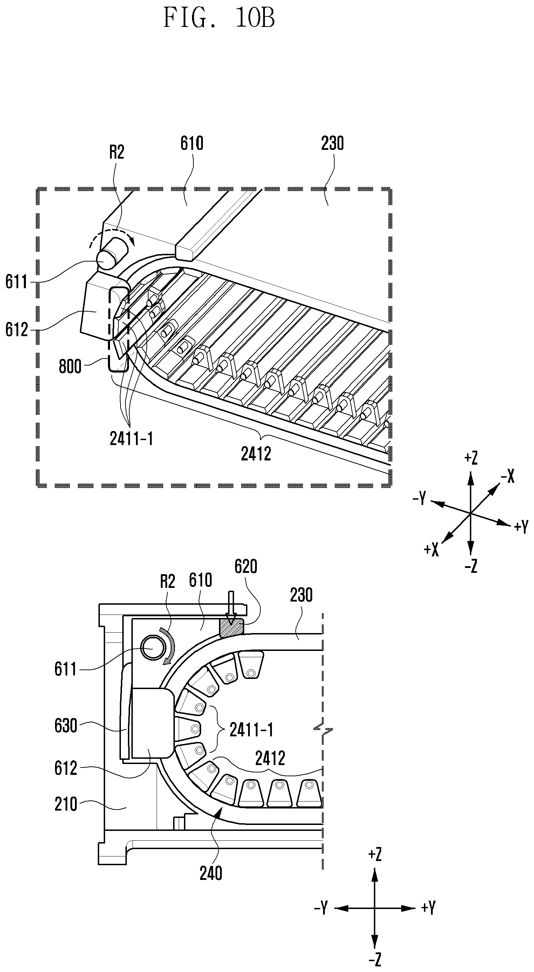

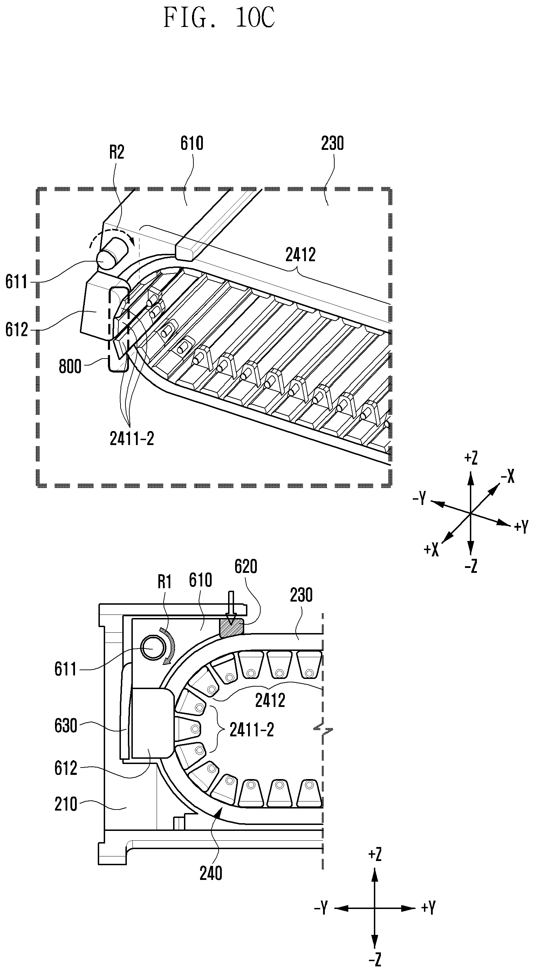

According to an embodiment, in a state where the first supporter 2411 is disposed at a position corresponding to the body 610, the contact member 800 may come into contact with the body 610 and rotate the body 610. In another example, in a state where the second supporter 2412 is disposed at a position facing the body 610, the contact member 800 and the body 610 may not be in contact with each other. Because the second supporter 2412 is positioned between the first-first supporter 2411-1 and the first-second supporter 2411-2, the contact member 800 and the body 610 may or may not be in contact with each other depending on the sliding state of the rollable display 230. For example, the first-first supporter 2411-1 may be disposed at a position corresponding to the body 610 in a state (hereinafter referred to as a "first state", a state shown in FIG. 5A) where the rollable display 230 slides in the first direction (e.g., the negative Y direction in FIG. 10A). In another example, the first-second supporter 2411-2 may be disposed at a position corresponding to the body 610 in a state (hereinafter referred to as a "second state", a state shown in FIG. 5B) where the rollable display 230 slides in the second direction (e.g., the positive Y direction in FIG. 10A) opposite to the first direction. In an intermediate state between the first state and the second state, the second supporter 2412 may be disposed at a position facing the body 610. For example, the contact member 800 may be in contact with the body 610 in the first state and the second state, and the contact member 800 may not be in contact with the body 610 in the intermediate state. This will be described in more detail with reference to FIGS. 10A, 10B, and 10C.

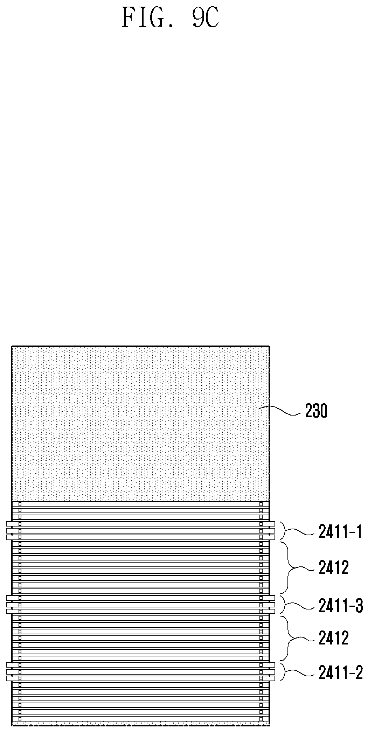

FIG. 9C is a rear development view illustrating a rollable display and a support member according to various embodiments of the disclosure.

With reference to FIG. 9C, the first supporter 2411 may further include a first-third supporter 2411-3. The first-third supporter 2411-3 may be disposed between the first-first supporter 2411-1 and the first-second support 2411-2. At least some of the second supporters 2412 may be disposed between the first-first supporter 2411-1 and the first-third supporter 2411-3, and at least some of the second supporters 2412 may be disposed between the first-third supporter 2411-3 and the first-second supporter 2411-2. In the case of the embodiment shown in FIG. 9C, because the first-third supporter 2411-3 is disposed between the first-first supporter 2411-1 and the first-second supporter 2411-2, the first-third supporter 2411-3 may be disposed at a position corresponding to the body 610 in the intermediate state. For example, the contact member 800 may be in contact with the body 610 in a partial section of the intermediate state.

FIG. 10A is a view illustrating the operation of a foreign object blocking member in an intermediate state of an electronic device according to various embodiments of the disclosure. FIG. 10B is a view illustrating the operation of a foreign object blocking member in a first state of an electronic device according to various embodiments of the disclosure. FIG. 10C is a view illustrating the operation of a foreign object blocking member in a second state of an electronic device according to various embodiments of the disclosure.

According to various embodiments, because the second supporter 2412 is disposed at a position corresponding to the body 610 in the intermediate state as shown in FIG. 10A, the contact member 800 and the body 610 may not be in contact with each other. The pressing part 630 of the foreign object blocking member 600 may press the body 610. By the force of the pressing part 630 pressing the body 610, the body 610 may rotate in a first rotational direction R1.

Because the force provided by the pressing part 630 mainly acts on the body 610 in a state where the contact member 800 is not in contact with the body 610, the body 610 may maintain a state of being rotated in the first rotational direction R1. In FIG. 10A, the first rotational direction R1 may be a counterclockwise direction. When the body 610 rotates in the first rotational direction R1, the blocking part 620 disposed on the body 610 may be spaced apart from the rollable display 230. As the body 610 rotates in the first rotational direction R1, the blocking part 620 may be completely spaced apart from the rollable display 230 or have a reduced degree of contact (or contact area, or contact strength) with the rollable display 230. The intermediate state in which the body 610 rotates in the first rotational direction R1 may include a state in which the rollable display 230 is sliding. In a process that the rollable display 230 is sliding, the body 610 rotates in the first rotational direction R1 and the blocking part 620 is spaced apart from the rollable display 230, so that the rollable display 230 can slide smoothly without interference of the blocking part 620. For example, as the contact state between the rollable display 230 and the blocking part 620 is maintained, the problem of damage to the rollable display 230 may be reduced.

As shown in FIG. 10B, in the first state, because the first-first supporter 2411-1 is disposed at a position corresponding to the body 610, the contact member 800 and the body 610 may come into contact with each other. The contact member 800 may press the body 610 while being in contact with the body 610. The force provided by the contact between the contact member 800 and the body 610 may be greater than the force provided by the pressing part 630 to the body 610. For this reason, the body 610 may rotate in a second rotational direction R2.

In an embodiment, the contact portion 612 of the body 610 and the contact member 800 may be in contact with each other. For example, the contact portion 612 of the body 610 may refer to a portion disposed at both ends of the body 610 and in contact with the contact member 800. In an embodiment, the contact portion 612 may be processed to be rounded for natural contact with the contact member 800.

The second rotational direction R2 may be a clockwise direction in FIG. 10B. When the body 610 rotates in the second rotational direction R2, the blocking part 620 disposed on the body 610 may come into contact with the rollable display 230. As the body 610 rotates in the second rotational direction R2, the blocking part 620 may be completely in close contact with the rollable display 230 or have an increase degree of contact (or contact area, or contact strength) with the rollable display 230. As the degree of contact of the blocking part 620 with the rollable display 230 increases or decreases, the inflow of foreign objects into the portion where the rollable display 230 slides in or slides out may be reduced.

According to various embodiments, the first state may refer to a state in which the rollable display 230 slides in the first direction (e.g., the negative Y direction in FIG. 10B). For example, the first state may include a state in which the rollable display 230 has completely slid in the first direction, or may include a state in which the sliding of the second housing 220 with respect to the first housing 210 is less than 50%.

According to various embodiments, by adjusting the width of the first-first supporter 2411-1 or the number of the first-first supporters 2411-1, a point where the contact member 800 comes into contact with the body 610 in response to sliding may be variously changed. For example, when the width of the first-first supporter 2411-1 is increased or the number of the first-first supports 2411-1 is increased, a section where the contact member 800 and the body 610 are in contact with each other may be increased.

As shown in FIG. 10C, in the second state, because the first-second supporter 2411-2 is disposed at a position corresponding to the body 610, the contact member 800 and the body 610 may come into contact with each other. The contact member 800 may press the body 610 while being in contact with the body 610. The force provided by the contact between the contact member 800 and the body 610 may be greater than the force provided by the pressing part 630 to the body 610. For this reason, the body 610 may rotate in the second rotational direction R2.

In an embodiment, the contact portion 612 of the body 610 and the contact member 800 may be in contact with each other. For example, the contact portion 612 of the body 610 may refer to a portion disposed at both ends of the body 610 and in contact with the contact member 800. In an embodiment, the contact portion 612 may be processed to be rounded for natural contact with the contact member 800.

The second rotational direction R2 may be a clockwise direction in FIG. 10C. When the body 610 rotates in the second rotational direction R2, the blocking part 620 disposed on the body 610 may come into contact with the rollable display 230. As the body 610 rotates in the second rotational direction R2, the blocking part 620 may be completely in close contact with the rollable display 230 or have an increase degree of contact (or contact area, or contact strength) with the rollable display 230. As the degree of contact of the blocking part 620 with the rollable display 230 increases or decreases, the inflow of foreign objects into the portion where the rollable display 230 slides in or slides out may be reduced.

According to various embodiments, the second state may refer to a state in which the rollable display 230 slides in the second direction (e.g., the positive Y direction in FIG. 10C). For example, the second state may include a state in which the rollable display 230 has completely slid in the second direction, or may include a state in which the sliding of the second housing 220 with respect to the first housing 210 is 50% or more.

According to various embodiments, by adjusting the width of the first-second supporter 2411-2 or the number of the first-second supporters 2411-2, a point where the contact member 800 comes into contact with the body 610 in response to sliding may be variously changed. For example, when the width of the first-second supporter 2411-2 is increased or the number of the first-second supports 2411-2 is increased, a section where the contact member 800 and the body 610 are in contact with each other may be increased.

In the above description, the structure in which the blocking part 620 comes into contact with the rollable display 230 in response to the contact between the contact member 800 and the body 610 is described, but other designs may also be possible. For example, a structure in which the blocking part 620 is spaced apart from the rollable display 230 in response to the contact between the contact member 800 and the body 610 may be possible. In this structure, the contact member 800 and the body 610 may not be in contact with each other in the first state and the second state, and may be in contact with each other in the intermediate state. In addition, it may be possible to configure the body 610 to rotate in the second rotational direction R2 by the force provided by the pressing part 630 and to rotate in the first rotational direction R1 by the contact between the contact member 800 and the portion 610.

In another embodiment, a structure in which the blocking part 620 does not completely contact the rollable display 230 and has a predetermined separation distance in response to the contact between the contact member 800 and the body 610 is also possible. In this structure, the predetermined separation distance between the blocking part 620 and the rollable display 230 may be configured such that the inflow of foreign objects between the blocking part 620 and the rollable display 230 is reduced below a predetermined reference. In this structure, the predetermined separation distance may be smaller than the separation distance formed by the blocking part 620 and the rollable display 230 in the intermediate state (e.g., a state in which the contact member 800 and the body 610 do not contact). The predetermined separation distance between the blocking part 620 and the rollable display 230 may be formed in a range of about 0.05 mm to 1 mm. Preferably, the predetermined separation distance between the blocking part 620 and the rollable display 230 may be formed in a range of 0.05 mm to 0.5 mm.

In addition, various changes may be made so that the blocking part 620 and the rollable display 230 come into contact with each other at a specific sliding point in response to the sliding of the rollable display 230.

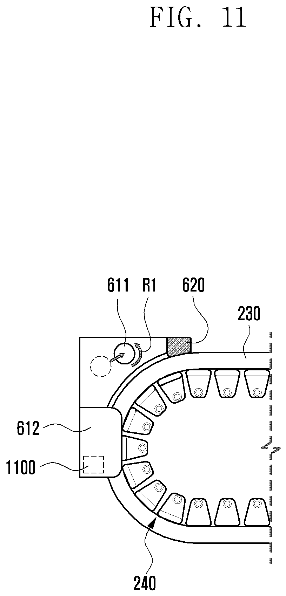

FIG. 11 is a view illustrating an example of changing a rotation axis of a foreign object blocking member according to various embodiments of the disclosure.

According to various embodiments, the rotation shaft 611 of the body 610 may be determined so that the foreign object blocking member 600 can rotate in the first rotational direction R1 by gravity acting on the foreign object blocking member 600.

As shown in FIG. 11, the position of the rotation shaft 611 may be adjusted such that the body 610 can rotate in the first rotational direction R1 by gravity in a state where the foreign object blocking member 600 is not in contact with the contact member 800. When the body 610 rotates in the first rotational direction R1, the blocking part 620 may be spaced apart from the rollable display 230.

In an embodiment, a weight 1100 may be added to the body 610 to increase the magnitude (Kgf) of gravity acting on the body 610.

In an embodiment, the body 610 may not include the pressing part 630.

FIGS. 12A and 12B are views illustrating blocking members according to various embodiments of the disclosure.

According to various embodiments, the blocking part 620 may be in close contact with the rollable display 230 in response to the rotation of the body 610. The blocking part 620 may be formed to have a shape corresponding to the curvature of a region in close contact with the rollable display 230. Therefore, the blocking part 620 may be naturally in close contact with the rollable display 230.

In some embodiment, the blocking part 620 may be formed in the form of a brush. When the blocking part 620 comes into contact with the rollable display 230, the brush may be deformed in part and thereby block foreign objects introduced between the blocking part 620 and the rollable display 230.

According to various embodiments of the disclosure, an electronic device (e.g., the electronic device 700 in FIG. 7) may include a first housing (e.g., the first housing 210 in FIG. 7), a second housing (e.g., the second housing 220 in FIG. 7) disposed to be slidable with respect to the first housing, a rollable display (e.g., the rollable display 230 in FIG. 7) at least a portion of which slides in into the first housing or slides out from the first housing based on slide-in or slide-out of the second housing, and a foreign object blocking member (e.g., the foreign object blocking member 600 in FIG. 6) disposed in the first housing and changed from a contact state to a non-contact state with the rollable display depending on the slide-in or slide-out of the rollable display.

In addition, the foreign object blocking member may include a body (e.g., the body 610 in FIG. 6) rotatably installed in the first housing at a portion where the rollable display slides in or out, and a blocking part (e.g., the blocking part 620 in FIG. 6) disposed on the body.

In addition, the electronic device may further include a contact member (e.g., the contact member 800 in FIG. 8) allowing the blocking part to be in contact with or separated from the rollable display by contacting and rotating the body in response to sliding of the rollable display.

In addition, the contact member may be in contact with the body in a first state that the second housing slides in a first direction with respect to the first housing and in a second state that the second housing slides in a second direction opposite to the first direction, and may not be in contact with the body in a third state that is an intermediate state between the first state and the second state.

In addition, the first state may include a state in which the second housing completely slides in the first direction with respect to the first housing, and the second state may include a state in which the second housing completely slides in the second direction with respect to the first housing.

In addition, the electronic device may further include a support member (e.g., the support member 240 in FIG. 7) including a plurality of supporters (e.g., the plurality of supporters 241 in FIG. 7) that are inserted in part into a guide rail (e.g., the guide rail 226 in FIG. 4), move along the guide rail, and are segmented from each other so as to support a bendable portion of the rollable display, and the contact member may be included in the support member.

In addition, the plurality of supporters included in the support member may include a first supporter (e.g., the first supporter 2411 in FIG. 8) and a second supporter (e.g., the second supporter 2412 in FIG. 8), the first supporter may be formed to protrude further in one direction compared to the second supporter, and the contact member may be a protruding portion of the first supporter.

In addition, the first supporter may include a first-first supporter (e.g., the first-first supporter 2411-1 in FIG. 8) and a first-second supporter (e.g., the first-second supporter 2411-2 in FIG. 8), and the second supporter may be disposed between the first-first supporter and the first-second supporter.

In addition, a protruding portion of the first-first supporter may be in contact with the body in the first state that the second housing slides in the first direction with respect to the first housing, and a protruding portion of the first-second supporter may be in contact with the body in the second state that the second housing slides in the second direction opposite to the first direction with respect to the first housing.

In addition, the foreign object blocking member may further include a pressing part (e.g., the pressing part 630 in FIG. 6) pressing the body such that the body rotates in a first rotational direction, and the contact member may be in contact with the body such that the body rotates in a second rotational direction opposite to the first rotational direction.

In addition, the blocking part may be spaced apart from the rollable display when the body of the foreign object blocking member rotates in the first rotational direction, and the blocking part may be in contact with the rollable display when the body of the foreign object blocking member rotates in the second rotational direction.

In addition, the body of the foreign object blocking member may have a rotation shaft a position of which is adjusted so that the body rotates in the first rotational direction by gravity acting on the body, and the contact member may be in contact with the body such that the body rotates in a second rotational direction opposite to the first rotational direction.

In addition, the body of the foreign object blocking member may further have a weight (e.g., the weight 1100 in FIG. 11) to increase the gravity acting on the body.

In addition, the blocking part may be spaced apart from the rollable display when the body of the foreign object blocking member rotates in the first rotational direction, and the blocking part may be in contact with the rollable display when the body of the foreign object blocking member rotates in the second rotational direction.

In addition, the blocking part of the foreign object blocking member may be formed in a shape corresponding to the curvature of the rollable display facing the blocking part.

According to various embodiments of the disclosure, an electronic device may include a first housing, a second housing disposed to be slidable with respect to the first housing, a rollable display at least a portion of which slides in into the first housing or slides out from the first housing based on slide-in or slide-out of the second housing, and a foreign object blocking member (e.g., the foreign object blocking member 600 in FIG. 6) disposed in the second housing and changed from a contact state to a non-contact state with the rollable display depending on the slide-in or slide-out of the rollable display.

In addition, the foreign object blocking member may include a body (e.g., the body 610 in FIG. 6) rotatably installed in the first housing at a portion where the rollable display slides in or out, and a blocking part (e.g., the blocking part 620 in FIG. 6) disposed on the body.

In addition, the electronic device may further include a contact member (e.g., the contact member 800 in FIG. 8) allowing the blocking part to be in contact with or separated from the rollable display by contacting and rotating the body in response to sliding of the rollable display.

In addition, the contact member may be in contact with the body in a first state that the second housing slides in a first direction with respect to the first housing and in a second state that the second housing slides in a second direction opposite to the first direction, and may not be in contact with the body in a third state that is an intermediate state between the first state and the second state.

In addition, the first state may include a state in which the second housing completely slides in the first direction with respect to the first housing, and the second state may include a state in which the second housing completely slides in the second direction with respect to the first housing.

In addition, the electronic device may further include a support member (e.g., the support member 240 in FIG. 7) including a plurality of supporters (e.g., the plurality of supporters 241 in FIG. 7) that are inserted in part into a guide rail (e.g., the guide rail 226 in FIG. 4), move along the guide rail, and are segmented from each other so as to support a bendable portion of the rollable display, and the contact member may be included in the support member.

In addition, the plurality of supporters included in the support member may include a first supporter (e.g., the first supporter 2411 in FIG. 8) and a second supporter (e.g., the second supporter 2412 in FIG. 8), the first supporter may be formed to protrude further in one direction compared to the second supporter, and the contact member may be a protruding portion of the first supporter.

In addition, the first supporter may include a first-first supporter (e.g., the first-first supporter 2411-1 in FIG. 8) and a first-second supporter (e.g., the first-second supporter 2411-2 in FIG. 8), and the second supporter may be disposed between the first-first supporter and the first-second supporter.

In addition, a protruding portion of the first-first supporter may be in contact with the body in the first state that the second housing slides in the first direction with respect to the first housing, and a protruding portion of the first-second supporter may be in contact with the body in the second state that the second housing slides in the second direction opposite to the first direction with respect to the first housing.

In addition, the first supporter may further include a first-third supporter disposed between the first-first supporter and the first-second supporter. A protruding portion of the first-third supporter may be in contact with the body in a partial section of the third state that is the intermediate state between the first state and the second state.

The electronic device according to various embodiments of the disclosure may be one of various types of electronic devices. The electronic devices may incl ude, for example, a portable communication device (e.g., a smartphone), a co mputer device, a portable multimedia device, a portable medical device, a cam era, a wearable device, or a home appliance. The electronic devices according to embodiments of the disclosure are not limited to those described above.

It should be appreciated that various embodiments of the disclosure and the terms used therein are not intended to limit the technological feature s set forth herein to particular embodiments and include various changes , equivalents, or replacements for a corresponding embodiment. With reg ard to the description of the drawings, similar reference numerals may b e used to refer to similar or related elements. It is to be understood tha t a singular form of a noun corresponding to an item may include one or more of the things, unless the relevant context clearly indicates other wise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a c orresponding one of the phrases. As used herein, such terms as "1st" an d "2nd", or "first" and "second" may be used to simply distinguish a c orresponding component from another, and does not limit the component s in other aspect (e.g., importance or order). It is to be understood that if an element (e.g., a first element) is referred to, with or without the t erm "operatively" or "communicatively", as "coupled with", "coupled to" , "connected with", or "connected to" another element (e.g., a second el ement), it means that the element may be coupled with the other eleme nt directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

## Claims

1. An electronic device (101, 200) comprising:
a first housing (210);
a second housing (220) slidably coupled to the first housing (210);
a rollable display (230) at least a portion of which is configured to slide into the first housing (210) or slide out from the first housing (210) based on sliding movement of the second housing (220) with respect to the first housing (210);
a foreign object blocking member (600)
including a body (610) rotatably connected to the first housing (210) and a blocking part (620) disposed at the body (610); and
a support member (240) supporting at least a portion of the rollable display and including a plurality of supporters segmented from each other,
wherein the supporters include first type supporters and second type supporters,
wherein the first type supporters are formed to protrude further in one direction compared with the second type supporters, and
wherein a contact member (800) is a protruding portion of the first type supporters and configured to contact with or separate from the body depending on the sliding movement of the rollable display (230), wherein a contact of the contact member with the body causes the body to be pressed such that the blocking part contacts with the rollable display, and wherein a release of the contact of the contact member with the body causes the blocking part (620) to be separated from the rollable display.

2. The electronic device (101, 200) of claim 1,
wherein the contact member (800) is configured to contact with the body (610) when the second housing locates at a first position in a first direction with respect to the first housing or when the second housing locates at a second position in a second direction opposite to the first direction,
wherein the contact member is configured to be not in contact with the body when the second housing locates at a position between the first position and the second position.

3. The electronic device (101, 200) of claim 2,
wherein the first position is a position where the second housing (220) is configured to completely slide in the first direction with respect to the first housing (210), and
the second position is a position where the second housing (220) is configured to completely slide
in the second direction with respect to the first housing (210).

4. The electronic device (101, 200) of claim 2 or 3,
wherein the supporters are inserted in part into a guide rail (226), and configured to move along the guide rail (226).

5. The electronic device (101, 200) of claim 4,
wherein the first type supporters include first-first supporters and first-second supporters, and
wherein the second type supporters are disposed between the first-first supporters and the first-second supporters.

6. The electronic device (101, 200) of claim 5,
wherein a protruding portion of the first-first supporters is configured to contact with the body (610) when the second housing (220) slides to a first position in the first direction with respect to the first housing (210), and
wherein a protruding portion of the first-second supporters is configured to contact with the body (610) when the second housing (220) slides to a second position in the second direction opposite to the first direction.

7. The electronic device (101, 200) of claim 6,
wherein the first type supporters further include first-third supporters disposed between the first-first supporters and the first-second supporters, and
wherein a protruding portion of the first-third supporters is configured to contact with the body (610) in a partial section when the second housing (220) locates at a position between the first position and the second position.

8. The electronic device (101, 200) of claim 1, further comprising:
a pressing part (630) configured to press the body (610) such that the body (610) rotates in a first rotational direction.

9. The electronic device (101, 200) of claim 1,
wherein the contact of the contact member with the body causes the body to rotate in a first rotational direction such that the blocking part contacts with the rollable display,
wherein the release of the contact of the contact member with the body causes the body to rotate in a second rotational direction opposite to the first rotational direction such that the blocking part is separated from the rollable display.

10. The electronic device (101, 200) of claim 1,
wherein the body (610) of the foreign object blocking member (600) has a rotation shaft, a position of which is adjusted so that the body (610) rotates in a first rotational direction by gravity acting on the body (610).

11. The electronic device (101, 200) of claim 10,
wherein the body (610) of the foreign object blocking member (600) further has a weight to increase the gravity acting on the body (610).

## Patentansprüche

1. Elektronische Vorrichtung (101, 200), umfassend:
ein erstes Gehäuse (210);
ein zweites Gehäuse (220), das verschiebbar mit dem ersten Gehäuse (210) gekoppelt ist;
eine rollbare Anzeige (230), von der zumindest ein Abschnitt so konfiguriert ist, dass er basierend auf der Gleitbewegung des zweiten Gehäuses (220) in Bezug auf das erste Gehäuse (210) in das erste Gehäuse (210) hineingleitet oder aus dem ersten Gehäuse (210) herausgleitet;
ein Fremdkörperblockierelement (600),
das einen Körper (610), der drehbar mit dem ersten Gehäuse (210) verbunden ist, und ein am Körper (610) angeordnetes Blockierteil (620) umfasst; und
ein Trägerelement (240), das zumindest einen Abschnitt der rollbaren Anzeige stützt und eine Vielzahl von voneinander getrennten Trägern beinhaltet,
wobei die Träger eines ersten Typs und Träger eines zweiten Typs beinhalten,
wobei die Träger des ersten Typs so ausgebildet sind, dass sie in einer Richtung weiter hervorstehen als die Träger des zweiten Typs, und
wobei ein Kontaktelement (800) ein vorstehender Abschnitt der Träger des ersten Typs ist und so konfiguriert ist, dass es je nach der Gleitbewegung der rollbaren Anzeige (230) mit dem Körper in Kontakt kommt oder sich von diesem löst, wobei ein Kontakt des Kontaktelements mit dem Körper bewirkt, dass der Körper so zusammengedrückt wird, dass das Blockierteil mit der rollbaren Anzeige in Kontakt kommt, und wobei ein Lösen des Kontakts des Kontaktelements mit dem Körper bewirkt, dass sich das Blockierteil (620) von der rollbaren Anzeige löst.

2. Elektronische Vorrichtung (101, 200) nach Anspruch 1,
wobei das Kontaktelement (800) so konfiguriert ist, dass es mit dem Körper (610) in Kontakt kommt, wenn sich das zweite Gehäuse an einer ersten Position in einer ersten Richtung in Bezug auf das erste Gehäuse befindet oder wenn sich das zweite Gehäuse an einer zweiten Position in einer zweiten Richtung befindet, die der ersten Richtung entgegengesetzt ist,
wobei das Kontaktelement so konfiguriert ist, dass es keinen Kontakt mit dem Körper hat, wenn sich das zweite Gehäuse an einer Position zwischen der ersten Position und der zweiten Position befindet.

3. Elektronische Vorrichtung (101, 200) nach Anspruch 2,
wobei die erste Position eine Position ist, in der das zweite Gehäuse (220) so konfiguriert ist, dass es in Bezug auf das erste Gehäuse (210) vollständig in die erste Richtung gleitet, und
die zweite Position eine Position ist, in der das zweite Gehäuse (220) so konfiguriert ist, dass es in Bezug auf das erste Gehäuse (210) vollständig in die zweite Richtung gleitet.

4. Elektronische Vorrichtung (101, 200) nach Anspruch 2 oder 3,
wobei die Träger teilweise in eine Führungsschiene (226) eingeführt sind und so konfiguriert sind, dass sie sich entlang der Führungsschiene (226) bewegen.

5. Elektronische Vorrichtung (101, 200) nach Anspruch 4,
wobei die Träger des ersten Typs erste-erste Träger und erste-zweite Träger beinhalten, und
wobei die Träger des zweiten Typs zwischen den ersten-ersten Trägern und den ersten-zweiten Trägern angeordnet sind.

6. Elektronische Vorrichtung (101, 200) nach Anspruch 5,
wobei ein vorstehender Abschnitt der ersten-ersten Träger so konfiguriert ist, dass er mit dem Körper (610) in Kontakt kommt, wenn das zweite Gehäuse (220) in Bezug auf das erste Gehäuse (210) in der ersten Richtung in eine erste Position gleitet, und
wobei ein vorstehender Abschnitt der ersten-zweiten Träger so konfiguriert ist, dass er mit dem Körper (610) in Kontakt kommt, wenn das zweite Gehäuse (220) in eine zweite Richtung, die der ersten Richtung entgegengesetzt ist, in eine zweite Position gleitet.

7. Elektronische Vorrichtung (101, 200) nach Anspruch 6,
wobei die Träger des ersten Typs ferner erste-dritte Träger beinhalten, die zwischen den ersten-ersten Trägern und den ersten-zweiten Trägern angeordnet sind, und
wobei ein vorstehender Abschnitt der ersten-dritten Trägern so konfiguriert ist, dass mit dem Körper (610) in einem Teilbereich in Kontakt kommt, wenn sich das zweite Gehäuse (220) an einer Position zwischen der ersten Position und der zweiten Position befindet.

8. Elektronische Vorrichtung (101, 200) nach Anspruch 1, ferner umfassend:
ein Druckteil (630), das so konfiguriert ist, dass es auf den Körper (610) drückt, sodass sich der Körper (610) in einer ersten Drehrichtung dreht.

9. Elektronische Vorrichtung (101, 200) nach Anspruch 1,
wobei der Kontakt des Kontaktelements mit dem Körper bewirkt, dass sich der Körper in eine erste Drehrichtung dreht, sodass das Blockierteil mit der rollbaren Anzeige in Kontakt kommt,
wobei das Lösen des Kontakts zwischen dem Kontaktelement und dem Körper bewirkt, dass sich der Körper in eine zweite Drehrichtung entgegengesetzt zur ersten Drehrichtung dreht, sodass sich das Blockierteil von der rollbaren Anzeige löst.

10. Elektronische Vorrichtung (101, 200) nach Anspruch 1,
wobei der Körper (610) des Fremdkörperblockierelements (600) eine Drehwelle aufweist, deren Position so eingestellt ist, dass sich der Körper (610) durch die auf den Körper (610) einwirkende Schwerkraft in einer ersten Drehrichtung dreht.

11. Elektronische Vorrichtung (101, 200) nach Anspruch 10,
wobei der Körper (610) des Fremdkörperblockierelements (600) ferner ein Gewicht aufweist, um die auf den Körper (610) wirkende Schwerkraft zu erhöhen.

## Revendications

1. Dispositif électronique (101, 200), comprenant :
un premier boîtier (210) ;
un deuxième boîtier (220) couplé de manière coulissante au premier boîtier (210) ;
un affichage enroulable (230) dont au moins une partie est configurée pour glisser à l'intérieur du premier boîtier (210) ou pour sortir à l'extérieur du premier boîtier (210) en se basant sur le mouvement de coulissement du deuxième boîtier (220) par rapport au premier boîtier (210) ;
un élément de blocage d'objet étranger (600)
comprenant un corps (610) relié de manière rotative au premier boîtier (210) et une partie de blocage (620) disposée au niveau du corps (610) ; et
un élément de support (240) soutenant au moins une partie de l'affichage enroulable et comprenant une pluralité de supports segmentés les uns par rapport aux autres,
dans lequel les supports comprennent des supports d'un premier type et des supports d'un deuxième type,
dans lequel les supports du premier type sont formés pour faire saillie plus loin dans une direction par rapport aux supports du deuxième type, et
dans lequel un élément de contact (800) est une partie saillante des supports du premier type et est configuré pour entrer en contact avec le boîtier ou s'en séparer en fonction du mouvement de coulissement de l'affichage enroulable (230), un contact de l'élément de contact avec le corps provoquant la pression de ce dernier de telle sorte que la partie de blocage entre en contact avec l'affichage enroulable, et une libération du contact de l'élément de contact avec le corps provoquant la séparation de la partie de blocage (620) de l'affichage enroulable.

2. Dispositif électronique (101, 200) de la revendication 1,
dans lequel l'élément de contact (800) est configuré pour entrer en contact avec le corps (610) lorsque le deuxième boîtier se trouve au niveau d'une première position dans une première direction par rapport au premier boîtier ou lorsque le deuxième boîtier se trouve au niveau d'une deuxième position dans une deuxième direction opposée à la première direction,
dans lequel l'élément de contact est configuré pour ne pas être en contact avec le corps lorsque le second boîtier se trouve au niveau d'une position entre la première position et la deuxième position.

3. Dispositif électronique (101, 200) de la revendication 2,
dans lequel la première position est une position dans laquelle le second boîtier (220) est configuré pour coulisser entièrement dans la première direction par rapport au premier boîtier (210), et
la deuxième position est une position dans laquelle le deuxième boîtier (220) est configuré pour coulisser entièrement dans la deuxième direction par rapport au premier boîtier (210).

4. Dispositif électronique (101, 200) de la revendication 2 ou 3,
dans lequel les supports sont partiellement insérés dans un rail de guidage (226) et sont configurés pour se déplacer le long du rail de guidage (226).

5. Dispositif électronique (101, 200) de la revendication 4,
dans lequel les supports du premier type comprennent des premiers-premiers supports et les premiers-deuxièmes supports, et
dans lequel les supports du deuxième type sont disposés entre les premiers-premiers supports et les premiers-deuxièmes supports.

6. Dispositif électronique (101, 200) de la revendication 5,
dans lequel une partie saillante des premiers-premiers supports est configurée pour entrer en contact avec le corps (610) lorsque le second boîtier (220) coulisse vers une première position dans la première direction par rapport au premier boîtier (210), et
dans lequel une partie saillante des premiers-deuxièmes supports est configurée pour entrer en contact avec le corps (610) lorsque le deuxième boîtier (220) coulisse vers une deuxième position dans la deuxième direction, opposée à la première direction.

7. Dispositif électronique (101, 200) de la revendication 6,
dans lequel les supports du premier type comprennent en outre des premiers-troisièmes supports disposés entre les premiers-premiers supports et les premiers-deuxièmes supports, et
dans lequel une partie saillante des premiers-troisièmes supports est configurée pour entrer en contact avec le corps (610) dans une section partielle lorsque le deuxième boîtier (220) se trouve dans une position entre la première position et la deuxième position.

8. Dispositif électronique (101, 200) de la revendication 1, comprenant en outre :
une partie de pression (630) configurée pour exercer une pression sur le corps (610) de manière à ce le corps (630) tourne dans un premier sens de rotation.

9. Dispositif électronique (101, 200) de la revendication 1,
dans lequel le contact entre l'élément de contact et le corps entraîne la rotation du corps dans un premier sens de rotation, de telle sorte que la partie de blocage entre en contact avec l'affichage enroulable,
dans lequel la libération du contact entre l'élément de contact et le corps entraîne la rotation du corps dans un deuxième sens de rotation opposé au premier sens de rotation, de sorte que la partie de blocage se sépare de l'affichage enroulable.

10. Dispositif électronique (101, 200) de la revendication 1,
dans lequel le corps (610) de l'élément de blocage d'objet étranger (600) présente un arbre de rotation dont une position est réglée de telle sorte que le corps (610) tourne dans un premier sens de rotation sous l'effet de la gravité agissant sur le corps (610).

11. Dispositif électronique (101, 200) de la revendication 10,
dans lequel le corps (610) de l'élément de blocage d'objet étranger (600) présente en outre un poids destiné à augmenter la force de gravité agissant sur le corps (610).
